# EUROPEAN PATENT APPLICATION

(11) **EP 4 709 022 A1**
(43) Date of publication of application: **11.03.2026**
(21) Application number: 24843390.6
(22) Date of filing: 08.07.2024
(51) Int. Cl.: H04W 74/0808, H04J 3/02, H04W 84/12, H04W 74/0816, H04W 72/0446, H04W 72/50, H04L 5/22, H04W 74/04

(54) **TRANSMISSION OPPORTUNITY SHARING PROCEDURE IN WHICH COOPERATIVE ACCESS POINTS PARTICIPATE IN WIRELESS LAN SYSTEM**

(30) Priority: 20.07.2023 KR 20230094790; 20.07.2023 KR 20230094791; 18.08.2023 KR 20230108561; 25.09.2023 KR 20230128546
(71) Applicant: LG Electronics Inc., Yeongdeungpo-gu Seoul 07336 (KR)
(72) Inventor: KIM, Geonhwan, Seoul 06772 (KR); CHOI, Jinsoo, Seoul 06772 (KR); JANG, Insun, Seoul 06772 (KR); BAEK, Sunhee, Seoul 06772 (KR); YOON, Yelin, Seoul 06772 (KR); CHA, Dongju, Seoul 06772 (KR)
(74) Representative: Frenkel, Matthias Alexander
(86) International application number: PCT/KR2024/009670
(87) International publication number: WO 2025/018671

(57) **Abstract**

The present disclosure relates to a transmission opportunity (TXOP) sharing procedure in which cooperative access points (APs) participate in a wireless LAN system. According to an embodiment of the present disclosure, a method performed by a station (STA) in a wireless local area network (LAN) system comprises the steps of: detecting a frame transmitted from a second access point (AP) sharing a transmission opportunity (TXOP) with a first AP connected to the STA; identifying a duration field of the frame; on the basis of the duration field of the frame being configured to have a value smaller than a value corresponding to the entire TXOP period, omitting setting of a network allocation vector (NAV) during at least a portion of the entire TXOP period; and performing frame exchange with the first AP within at least a portion of the entire TXOP period in which the setting of the NAV is omitted.

## Description

### Technical field

The present disclosure is related to transmission opportunity (TXOP) sharing procedure in which coordination access points (APs) participate in a wireless local area network (WLAN) system.

### Background Art

Next-generation Wi-Fi (e.g., IEEE 802.11be and/or later) aims to support ultra-high reliability in signaling to STAs, and various technologies are being considered to support high throughput, low latency, and extended range. For example, multiple APs may coordinate to perform a TXOP sharing procedure.

### Disclosure of Invention

### Technical Problem

An aspect of the present disclosure is to provide method and apparatus for TXOP sharing procedure in which coordination APs participate in a WLAN system.

### Solution to Problem

According to an embodiment of the present disclosure, a method performed by a station (STA) in a wireless local area network (LAN) system comprises: detecting a frame transmitted from a second access point (AP) sharing a transmission opportunity (TXOP) to a first AP associated with the STA; identifying a duration field of the frame; based on the duration field of the frame being set to a value smaller than a value corresponding to an entire TXOP duration, skipping setting a network allocation vector (NAV) for at least a portion of the entire TXOP duration; and performing a frame exchange with the first AP within at least the portion of the entire TXOP duration for which the setting of the NAV is skipped.

According to an embodiment of the present disclosure, a method performed by an access point (AP) in a wireless local area network (LAN) system comprises: obtaining a transmission opportunity (TXOP); setting a duration field of a frame to be transmitted to a value smaller than a value corresponding to an entire TXOP duration; and transmitting the frame.

In various embodiments, apparatuses implementing the above methods are provided.

### Advantageous Effect

The present disclosure may have various advantageous effects.

For example, according to a C-TDMA-based TXOP sharing method protected by the SAP, non-AP STAs associated with the DAP may transmit UL PPDUs/frames by ignoring the basic NAV that has been set.

For example, according to a C-TDMA-based TXOP sharing method that is not protected by the SAP, non-AP STAs associated with the DAP may transmit UL PPDUs/frames without setting a basic NAV.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 shows an example of a transmitting apparatus and/or receiving apparatus of the present disclosure.
FIG. 2 is a conceptual view illustrating the structure of a wireless local area network (WLAN).
FIG. 3 illustrates a general link setup process.
FIG. 4 shows an example of a multi-link (ML).
FIG. 5 shows a modified example of a transmitting device and/or a receiving device of the present disclosure.
FIG. 6 shows an example of a physical protocol data unit or physical layer (PHY) protocol data unit (PPDU) transmitted/received by an STA of the present disclosure.
FIG. 7 illustrates the layout of resource units (RUs) used for a 20 MHz PPDU.
FIG. 8 illustrates the layout of resource units (RUs) used for 40MHz PPDU.
FIG. 9 illustrates the layout of resource units (RUs) used for an 80MHz PPDU.
FIG. 10 shows an operation related to UL-MU.
FIG. 11 illustrates an example of channels used/supported/defined within the 2.4 GHz band.
FIG. 12 illustrates an example of channels used/supported/defined within the 5 GHz band.
FIG. 13 illustrates an example of channels used, supported, and defined within the 6 GHz band.
FIG. 14 shows a trigger frame format. The trigger frame format may also be referred to as the structure of a trigger frame.
FIG. 15 shows an example of the User Info field format of the MU-RTS TXS TF.
FIG. 16 shows an example of operation when the TXOP sharing mode subfield has a value of 2.
FIG. 17 illustrates an example of a procedure related to NAV setting.
FIG. 18 shows an example of coordinated time division multiple access (C-TDMA) between coordinating APs.
FIG. 19 shows an example of a C-TDMA-based TXOP sharing procedure protected by a SAP according to an embodiment of the present disclosure.
FIG. 20 shows a first example of a procedure for ignoring a basic NAV that may be set by a SAP according to an embodiment of the present disclosure.
FIG. 21 shows a second example of a procedure for ignoring the basic NAV that can be set by the SAP according to an embodiment of the present disclosure.
FIG. 22 shows an example of a procedure for ignoring the basic NAV that may be set by a non-AP STA associated with a SAP according to an embodiment of the present disclosure.
FIG. 23 shows an example of a C-TDMA-based TXOP sharing procedure not protected by a SAP, according to an embodiment of the present disclosure.
FIG. 24 shows an example of a method performed by a STA according to an embodiment of the present disclosure.
FIG. 25 show an example of a method performed by an AP according to an embodiment of the present disclosure.

### Mode for the Invention

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

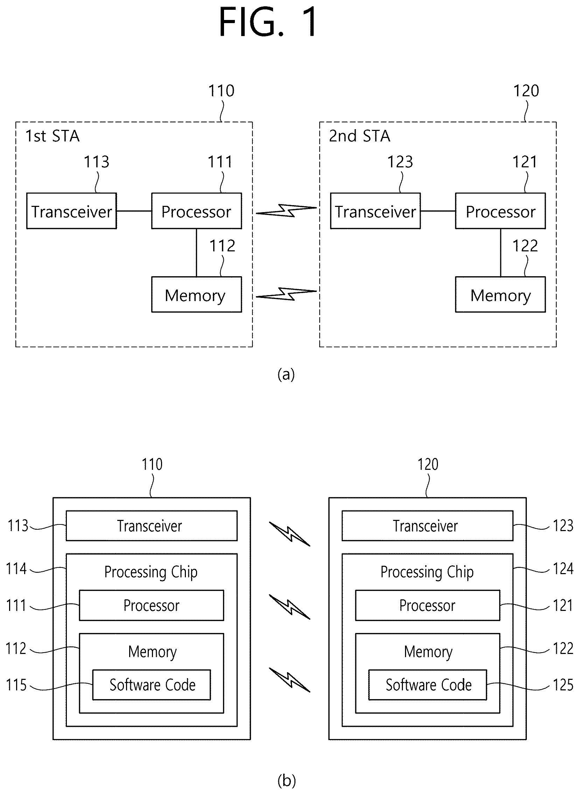

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal

(e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGON^{®} series of processors made by Qualcomm^{®}, EXYNOS^{®} series of processors made by Samsung^{®}, A series of processors made by Apple^{®}, HELIO^{®} series of processors made by MediaTek^{®}, ATOM^{®} series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

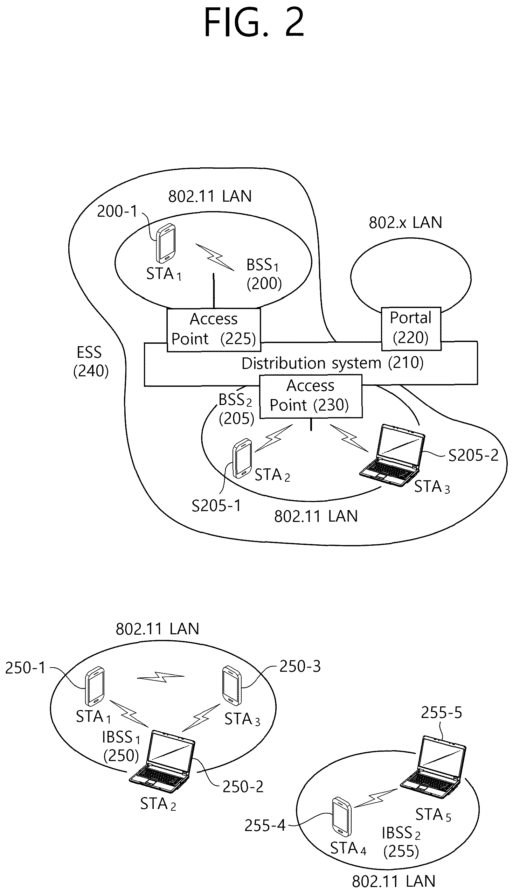

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

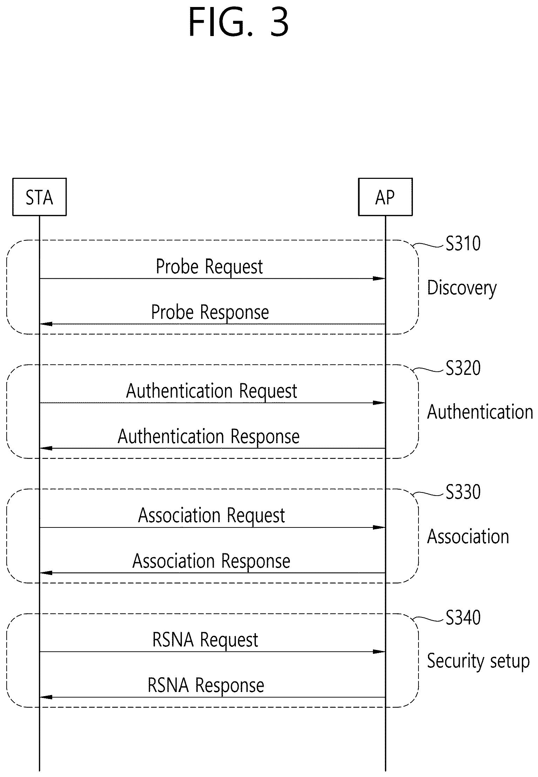

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

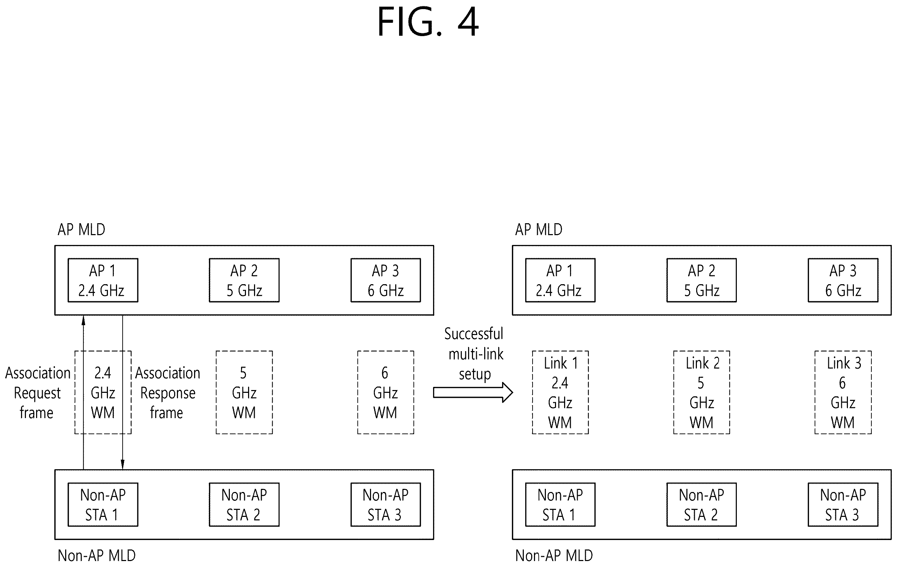

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

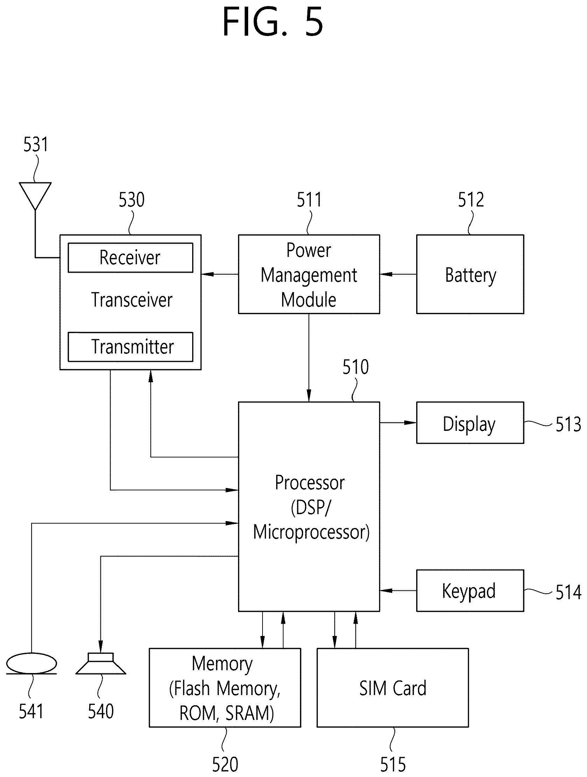

FIG. 5 shows a modified example of a transmitting device and/or a receiving device of the present disclosure.

The devices (e.g., AP STA, non-AP STA) shown in FIGS. 1 to 4 can be modified as shown in FIG. 5. The transceiver 530 of FIG. 5 can be identical to the transceiver 113, 123 of FIG. 1. The transceiver 530 of FIG. 5 can include a receiver and a transmitter.

The processor 510 of FIG. 5 can be identical to the processor 111, 121 of FIG. 1. Alternatively, the processor 510 of FIG. 5 can be identical to the processing chip 114, 124 of FIG. 1.

The memory 150 of FIG. 5 may be the same as the memory 112, 122 of FIG. 1. Alternatively, the memory 150 of FIG. 5 may be a separate external memory different from the memory 112, 122 of FIG. 1.

Referring to FIG. 5, the power management module 511 manages power for the processor 510 and/or the transceiver 530. The battery 512 supplies power to the power management module 511. The display 513 outputs the result processed by the processor 510. The keypad 514 receives input to be used by the processor 510. The keypad 514 may be displayed on the display 513. The SIM card 515 may be an integrated circuit used to securely store an international mobile subscriber identity (IMSI) and its associated keys, which are used to identify and authenticate subscribers in mobile devices such as mobile phones and computers.

Referring to FIG. 5, the speaker (540) may output sound-related results processed by the processor 510. The microphone (541) may receive sound-related input to be used by the processor 510.

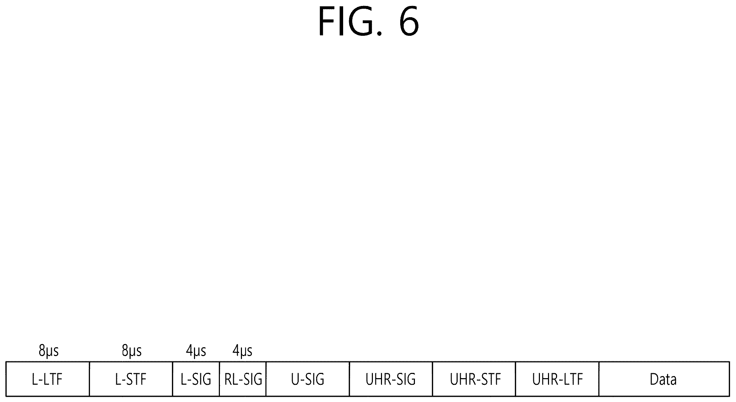

FIG. 6 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 6. The PPDU described in the present disclosure can have, for example, a structure of FIG. 6. In addition, the PPDU described in the present disclosure can be called by various names such as a transmission PPDU, a reception PPDU, a first type or an Nth type PPDU, etc. The PPDU described in the present disclosure can be used in a WLAN system defined according to IEEE 802.11bn and/or a next-generation WLAN system that improves IEEE 802.11bn.

The PPDU of FIG. 6 can be related to various PPDU types used in a UHR system. For example, the example of FIG. 6 can be used for at least one of single-user (SU) mode/type/transmission, multi-user (MU) mode/type/transmission, and null-data packet (NDP) mode/type/transmission related to channel sounding. For example, if the example of FIG. 6 is related to NDP, the data field illustrated can be omitted. If the PPDU of FIG. 6 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 6.

In FIG. 6, L-STF or UHR-LTF may be called a preamble or a physical preamble, and may be generated/transmitted/received/acquired/decoded in the physical layer (included in the transmitting/receiving STA).

Each block illustrated in FIG. 6 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 6.

A subcarrier spacing of the L-STF, L-LTF, L-SIG, RL-SIG, U-SIG, and UHR-SIG fields of FIG. 6 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 6, the L-LTF and the L-STF may be the same as those in the conventional fields (for example, non-HT LTF and non-HT STF defined in conventional WLAN standards).

The L-SIG field of FIG. 6 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (CBF), spatial reuse (SR), type related to coordinated OFDMA (C-OFDMA), type related to coordinated TDMA (CTDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 6. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 6 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 6 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

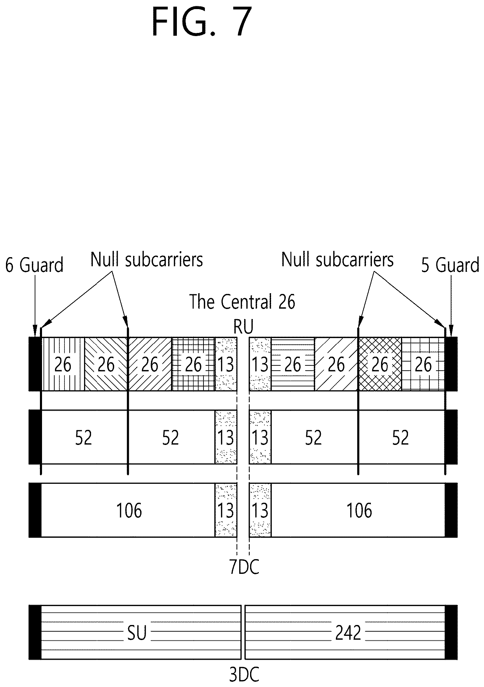

FIG. 7 illustrates the layout of resource units (RUs) used for a 20 MHz PPDU. That is, the UHR-LTF, UHR-STF, and/or data fields included in the 20 MHz PPDU can be transmitted/received through at least one of the various RUs defined in FIG. 7.

As illustrated in the uppermost part of FIG. 7, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

The layout of the RUs in FIG. 7 may be used not only for a multiple users (MUs) but also for a single user (SU), in which case one 242-unit may be used and three DC tones may be inserted as illustrated in the lowermost part of FIG. 7.

Although FIG. 7 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In the present disclosure, N-RU may be represented as N-tone RU, etc. For example, 26-RU may be represented as 26-tone RU.

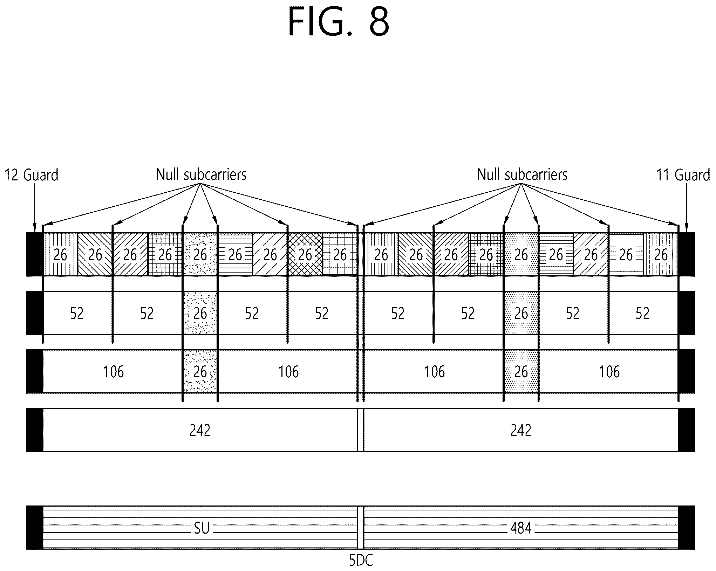

FIG. 8 illustrates the layout of resource units (RUs) used for 40MHz PPDU.

Similarly to FIG. 7 in which RUs having various sizes are used, a 26-RU, a 52-RU, a 106-RU, a 242-RU, a 484-RU, and the like may be used in an example of FIG. 8. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 8, when the layout of the RUs is used for a single user, a 484-RU may be used. The specific number of RUs may be changed similarly to FIG. 7.

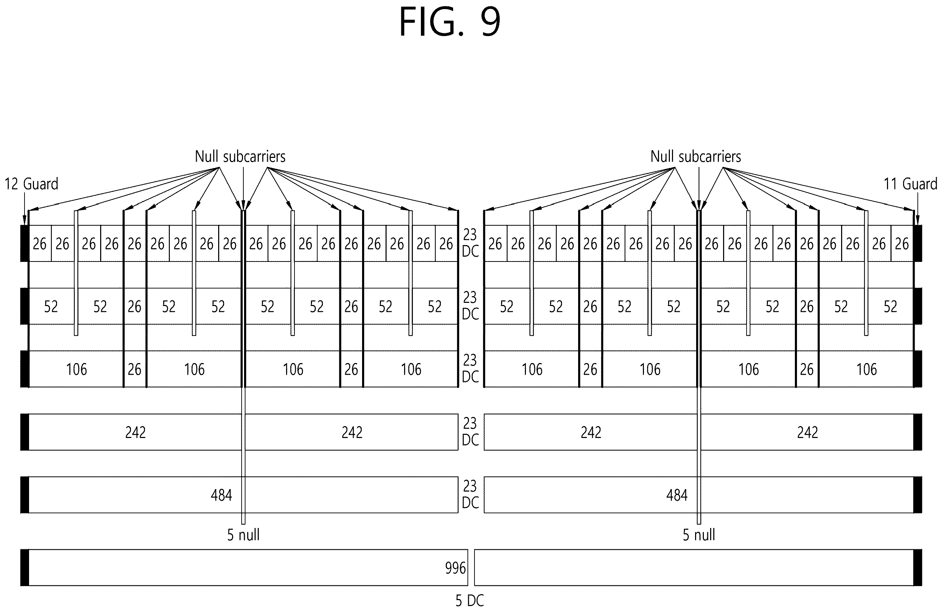

FIG. 9 illustrates the layout of resource units (RUs) used for an 80MHz PPDU. The layout of the resource units (RUs) used in the present disclosure may vary. For example, the layout of the resource units (RUs) used in the 80MHz band may vary.

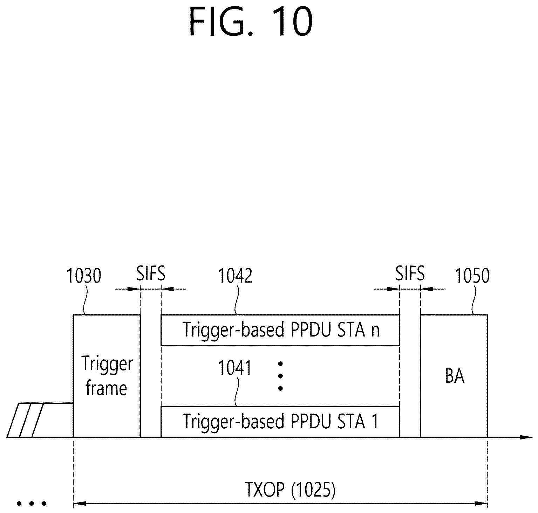

FIG. 10 shows an operation related to UL-MU. As shown, a transmitting STA (e.g., AP) can obtain TXOP 1025 by performing channel access through contending (i.e., backoff operation) and transmit trigger frame 1030. That is, the transmitting STA (e.g., AP) can transmit PPDU including trigger frame 1030. When PPDU including trigger frame is received, trigger-based (TB) PPDU is transmitted after delay of short interframe space (SIFS).

TB PPDU 1041, 1042 can be transmitted at the same time and transmitted from multiple STA (e.g., user STA) whose AID is indicated in trigger frame 1030. ACK frame 1050 for TB PPDU can be implemented in various forms. For example, ACK frame 1050 for TB PPDU can be implemented in the form of block ACK (BA).

In FIG. 10, transmission(s) of trigger Frame 1030, TB PPDU 1041, 1042 and/or ACK Frame 1050 can be performed within TXOP 1025.

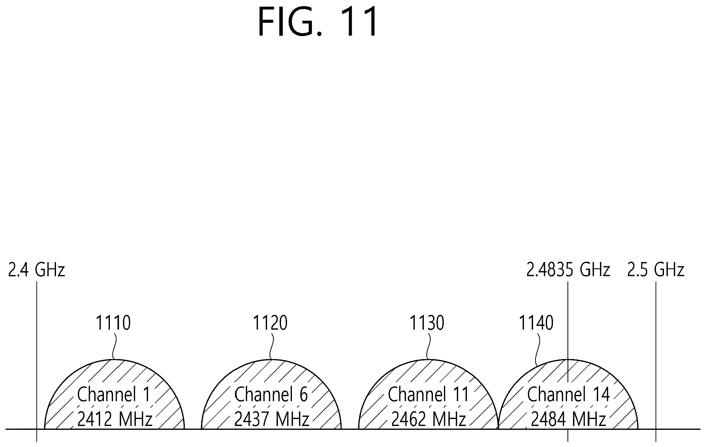

FIG. 11 illustrates an example of channels used/supported/defined within the 2.4 GHz band.

The 2.4 GHz band may also be referred to by other names, such as "first band." Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz within the 2.4 GHz band may have multiple channel indices (e.g., indices 1 through 14). For example, the center frequency of a 20 MHz channel assigned with channel index 1 may be 2.412 GHz, the center frequency of a 20 MHz channel assigned with channel index 2 may be 2.417 GHz, and the center frequency of a 20 MHz channel assigned with channel index N may be (2.407 + 0.005*N) GHz. Channel indices may be referred to by various names, such as channel numbers. The specific numerical values of the channel indices and center frequencies may vary.

FIG. 11 illustrates examples of four channels within the 2.4 GHz band. The illustrated first frequency region 1110 to fourth frequency regions 1140 may each include one channel. For example, the first frequency region 1110 may include channel 1 (a 20 MHz channel with index 1). In this case, the center frequency of channel 1 may be set to 2412 MHz. The second frequency range 1120 may include channel 6. The center frequency of channel 6 may be set to 2437 MHz. The third frequency range 1130 may include channel 11. The center frequency of channel 11 may be set to 2462 MHz. The fourth frequency range 1140 may include channel 14. The center frequency of channel 14 may be set to 2484 MHz.

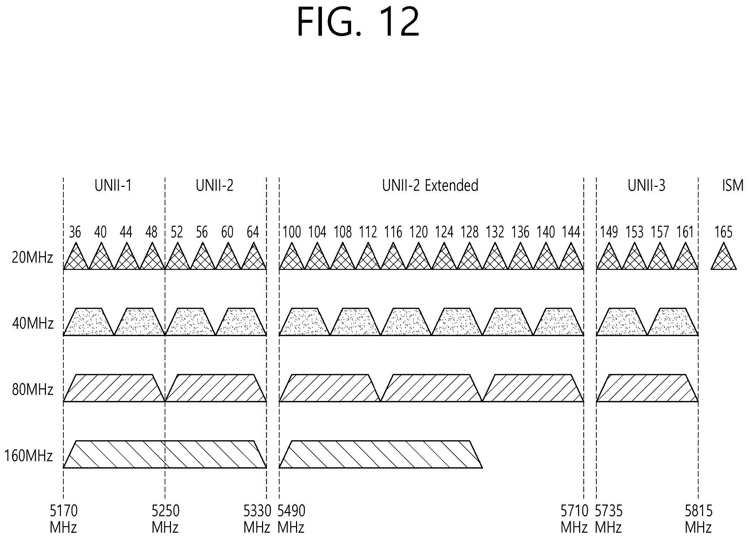

FIG. 12 illustrates an example of channels used/supported/defined within the 5 GHz band.

The 5 GHz band may be referred to by other names, such as "second band" or "band." The 5 GHz band may refer to a frequency range in which channels with a center frequency of 5 GHz or more but less than 6 GHz (or less than 5.9 GHz) are used/supported/defined. Alternatively, the 5 GHz band may include multiple channels between 4.5 GHz and 5.5 GHz. The specific numerical values shown in FIG. 12 may vary.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Multiple channels may be configured within the 5 GHz band, and the bandwidth of each channel may vary, such as 20 MHz, 40 MHz, 80 MHz, or 160 MHz. For example, the 5170 MHz to 5330 MHz frequency range within UNII-1 and UNII-2 may be divided into eight 20 MHz channels. The 5170 MHz to 5330 MHz frequency range can be divided into four channels across a 40 MHz frequency band. The 5170 MHz to 5330 MHz frequency range can be divided into two channels across an 80 MHz frequency band. Alternatively, the 5170 MHz to 5330 MHz frequency range can be divided into one channel across a 160 MHz frequency band.

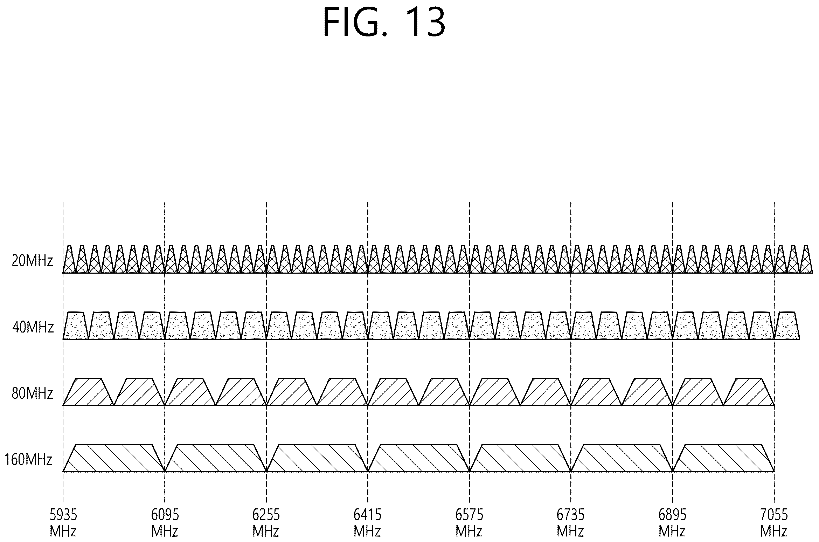

FIG. 13 illustrates an example of channels used, supported, and defined within the 6 GHz band.

The 6 GHz band may also be referred to by other names, such as the third band. The 6 GHz band may refer to a frequency range in which channels with center frequencies above 5.9 GHz are used, supported, and defined. The specific numbers shown in FIG. 13 may vary.

For example, the 20 MHz channel in FIG. 13 may be defined starting from 5.940 GHz. Specifically, the leftmost channel among the 20 MHz channels in FIG. 13 may have an index of 1 (or channel index, channel number, etc.), and a center frequency of 5.945 GHz may be assigned. That is, the center frequency of the index N channel may be determined as (5.940 + 0.005*N) GHz.

Accordingly, the indexes (or channel numbers) of the 20 MHz channels of FIG. 13 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, It can be 197, 201, 205, 209, 213, 217, 221, 225, 229, 233. Also, according to the (5.940 + 0.005*N) GHz rule mentioned above, the indices of the 40 MHz channels in FIG. 13 can be 3, 11, 19, 27, 35, 43, 51, 59, 67, 75, 83, 91, 99, 107, 115, 123, 131, 139, 147, 155, 163, 171, 179, 187, 195, 203, 211, 219, 227.

The MAC frames included in the data field of the PPDU of the present disclosure can be classified into various types. For example, the MAC frames of the present disclosure can be classified into control frames, management frames, and data frames.

For example, the management frame includes Association Request, Association Response, Reassociation Request, Reassociation Response, Probe Request, Probe Response, Beacon, Disassociation, Authentication, and Deauthentication frames/signals defined in conventional WLANs. For the management frame, the value of the type field (B3 and B2) of the MAC header is set to 00. Additionally, the values of the subtype fields (B7, B6, B5, B4) of the MAC header are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, Block Ack Request (BlockAckReq), Block Ack (BlockAck), PS-Poll, RTS, CTS, Ack, and CF-End frames/signals defined in conventional WLANs. For the control frame, the values of the type fields (B3 and B2) of the MAC header are set to 01. Additionally, the values of the subtype fields (B7, B6, B5, B4) of the MAC header are as follows: Trigger (0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For this data frame, the values of the type fields (B3 and B2) of the MAC header are set to 10.

The data frame may include an aggregated-control (A-Control) subfield. For example, the HT Control field included in the data frame may consist of 32 bits B0 to B31, and the A-Control subfield may consist of B2 to B31 of the HT Control field with B0 and B1 set to 1. In other words, the A-Control subfield may be 30 bit information.

The 30-bit A-Control subfield may have a structure as shown in <Table 1> below:

**[Table 1]**

| | |
|---|---|
| Control List | Padding |

The bit size (or number of bits) of the Control List subfield can be variable. The bit size of the Padding can be 0 or more. A Control List can contain one or more Control subfields. Each Control subfield can have a structure as shown in Table 2 below:

**[Table 2]**

| | |
|---|---|
| Control ID | Control Information |

The bit size of the Control ID subfield can be 4 (e.g., B0 to B3). The bit size of the Control Information can be variable. The values of the Control ID subfield can be defined as shown in <Table 3> below:

**[Table 3]**

| **Control ID value** | **Meaning** | **Length of the Control Information subfield (bits)** |
|---|---|---|
| 0 | Triggered response scheduling (TRS) | 26 |
| 1 | Operating mode (OM) | 12 |
| 2 | HE link adaptation (HLA) | 26 |
| 3 | Buffer status report (BSR) | 26 |
| 4 | UL power headroom (UPH) | 8 |
| 5 | Bandwidth query report (BQR) | 10 |
| 6 | Command and status (CAS) | 8 |
| 7-14 | Reserved | - |
| 15 | Ones need expansion surely (ONES) | 26 |

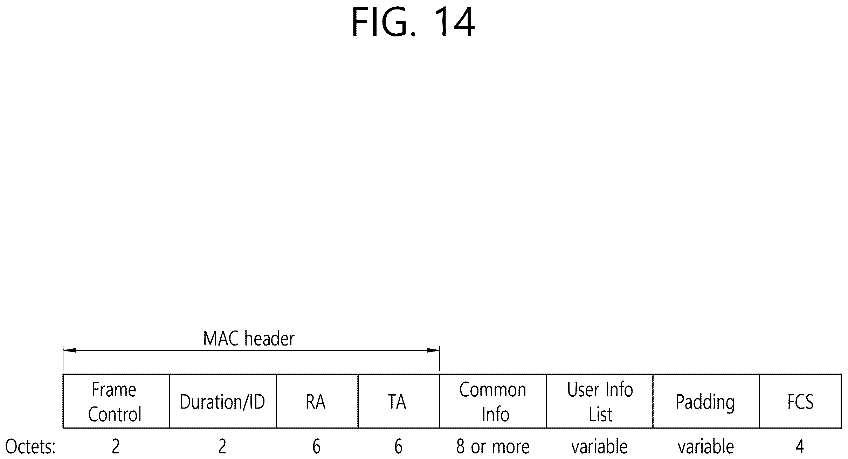

The type of the MAC frame used in the present disclosure may be identified through the type field/information and the subtype field/information included in the frame control field of the header of the MAC frame (i.e., the MAC header). For example, the "trigger frame" of the present disclosure may mean a MAC frame in which the type bits B3 and B2 in the frame control field of the MAC header are set to 01, and the subtype bits B7, B6, B5, and B4 in the frame control field are also set to 0010. Various MAC frames described in the present disclosure are inserted/included in the data field of various PPDUs (e.g., HE/VHT/HE/EHT/UHR PPDUs). FIG. 14 shows a trigger frame format. The trigger frame format may also be referred to as the structure of a trigger frame.

Referring to FIG. 14, a trigger frame may include a frame control field, a duration/ID field, a receiver address (RA) field, a transmitter address (TA) field, a Common Info field, a User Info list field, a padding field, and/or a frame check sequence (FCS) field. Optionally, the trigger frame may further comprise a special User Info field between the Common Info field and the User Info list field. The User Info list field may include one or more User Info fields. The frame control field, duration/ID field, RA field, and TA field may constitute a MAC header.

For example, the common information field may comprise a trigger type subfield. The value of the trigger type subfield may indicate a variant of the trigger frame as shown in <Table 4>:

**[Table 4]**

| **Trigger type subfield value** | **Trigger frame variant** |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8-15 | Reserved |

For example, if the value of the trigger type subfield is set to 0, the trigger frame may be a basic trigger frame. For example, if the value of the trigger type subfield is set to 3, the trigger frame may be a multi-user (MU) RTS trigger frame. Meanwhile, according to the EHT (i.e., 802.11be) standard, an AP can allocate a portion of the time duration within the TXOP obtained by the AP to support peer-to-peer (P2P) transmission to a non-AP STA. To allocate a portion of the time duration within a TXOP, a TXOP Sharing Mode subfield may be defined within the Common Info Field of the MU-RTS Trigger frame. When the value of the TXOP Sharing Mode subfield is non-zero, such a MU-RTS trigger frame may be referred to as a MU-RTS TXOP Sharing (TXS) Trigger frame (TF). A description of the values of the TXOP sharing mode subfield is shown in <Table 5> below:

**[Table 5]**

| **Triggered TXOP Sharing Mode subfield value** | **Description** |
|---|---|
| 0 | MU-RTS that does not initiate MU-RTS TXOP sharing procedure. |
| 1 | MU-RTS that initiates MU-RTS TXOP sharing procedure wherein a scheduledSTA can only transmit MPDU(s) addressed to its associated AP. |
| 2 | MU-RTS that initiates MU-RTS TXOP sharing procedure wherein a scheduled STA can transmit MPDU(s) addressed to its associated AP or addressed to another STA. |
| 3 | Reserved. |

For example, if the TXOP sharing mode subfield has a value of 1, one or more (non-TB) PPDU transmissions to the AP can be supported. If the TXOP sharing mode subfield has a value of 2, both (non-TB) PPDU transmission to the AP and P2P transmission can be supported. In this disclosure, the MU-RTS TXS TF may also be referred to simply as a TXS trigger frame.

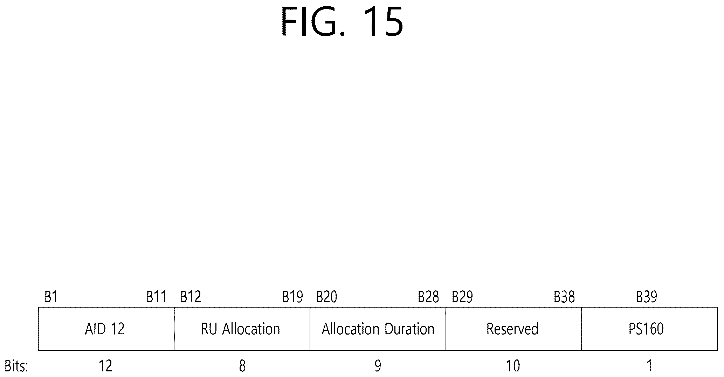

FIG. 15 shows an example of the User Info field format of the MU-RTS TXS TF.

Referring to FIG. 15, the User Info field may include an AID subfield, an RU allocation subfield, an allocation duration subfield, reserved bits, and/or a PS160 subfield.

The AID subfield may indicate the AID for the corresponding STA. The RU allocation subfield may indicate RU allocation for the corresponding STA.

The allocation duration subfield may include 9 bits from B20 to B28 in the MU-RTS TXS TF and may indicate an allocation duration in 16us units. In this case, the maximum length of the allocation duration indicated by the allocation duration subfield may be 8192 us.

The PS160 subfield may indicate the primary 160 MHz channel or the secondary 160 MHz channel to which RU or MRU allocation applies.

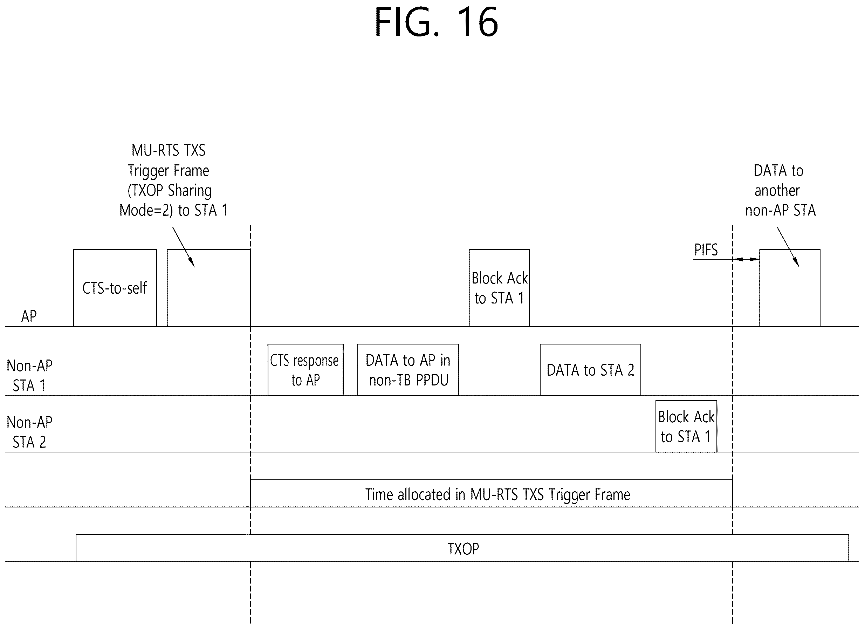

FIG. 16 shows an example of operation when the TXOP sharing mode subfield has a value of 2.

Referring to FIG. 16, the AP may transmit an MU-RTS TXS TF comprising allocation (time) duration information (e.g., Time allocated in MU-RTS TXS Trigger Frame) to non-AP STA 1. Non-AP STA 1 may transmit a CTS in response to the MU-RTS TXS TF and perform P2P transmission to non-AP STA 2.

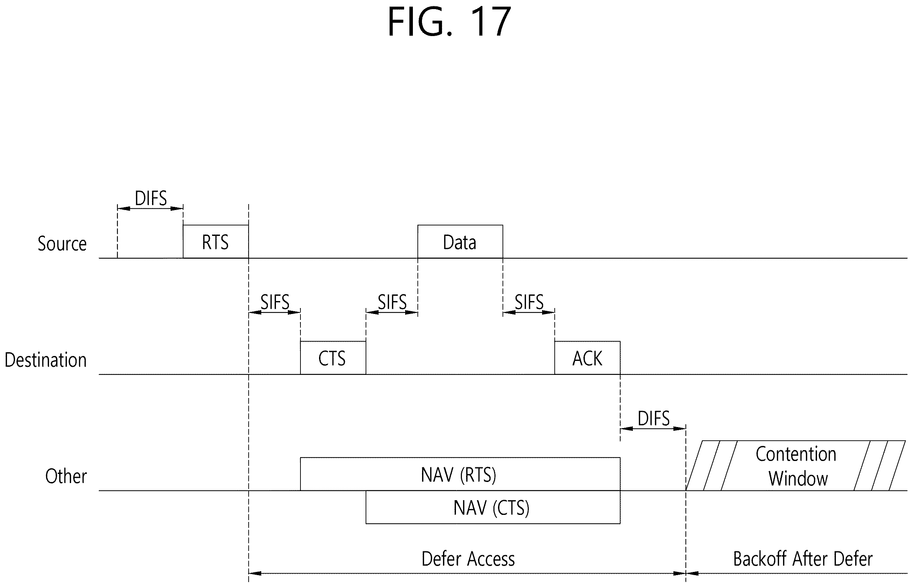

FIG. 17 illustrates an example of a procedure related to NAV setting.

Referring to FIG. 17, when a Source (e.g., an AP STA/non-AP STA) intending to transmit data transmits a request-to-send (RTS) frame to a Destination (e.g., an AP STA/non-AP STA) receiving the data, the Destination can transmit a clear-to-send (CTS) frame to neighboring stations to notify them that it will receive the data. In other words, the Destination designated as the receiver through the RTS frame can transmit a CTS frame. If the Source that transmitted the RTS frame receives the CTS frame, the Source can initiate data transmission to the Destination.

Meanwhile, if a STA other than the Destination designated as the receiver through the RTS frame receives the RTS frame, or if a STA other than the Source that transmitted the RTS frame receives the CTS frame, the STA can configure a network allocation vector (NAV). A STA that has set a NAV may not transmit data during the NAV period, which allows the STA to avoid collisions between the STA and the Source/Destination. On the other hand, if the Destination designated as the receiver through the RTS frame receives the RTS frame, or if the Source that transmitted the RTS frame receives a CTS frame, the Source/Destination does not set a NAV.

If a CTS frame (e.g., PHY-RXSTART.indication primitive) is not received within a certain period from the time the RTS frame is received (e.g., the time when the MAC receives the PHY-RXEND.indication primitive corresponding to the RTS frame), STAs that have set or updated a NAV through the RTS frame may reset the NAV (e.g., to 0). The certain period may be (2*aSIFSTime + CTS_Time + aRxPHYStartDelay + 2*aSlotTime). The CTS_Time can be calculated based on the length and data rate of the CTS frame indicated by the RTS frame.

For convenience of description, FIG. 17 shows setting or updating the NAV through the RTS frame or the CTS frame. However, NAV setting/resetting/updating can also be performed based on the duration field of various other frames, such as non-HT PPDU, HT PPDU, VHT PPDU, or HE PPDU (e.g., the duration field in the MAC header of a MAC frame). For example, if the RA field in a received MAC frame does not match its own address (e.g., MAC address), The STA may set, reset, or update the NAV based on the value of the Duration field in the received MAC frame.

A non-AP STA shall maintain two NAVs, and an AP may maintain two NAVs: an intra-BSS NAV (or, intra-NAV) and a basic NAV. The intra-BSS NAV may be updated/set by an intra-BSS PPDU. The basic NAV may be updated /set by an inter-BSS PPDU or a PPDU that cannot be classified as intra-BSS or inter-BSS.

For example, a STA shall classify a received PPDU as an inter-BSS PPDU if at least one of the following conditions is true:
- The PPDU carries a frame that has a BSSID field, the value of which is not the BSSID of the BSS in which the STA is associated or any of the other BSSs in the same multiple BSSID set or co-hosted BSSID set to which its BSS belongs or the wildcard BSSID; and/or
- The PPDU carries a frame that does not have a BSSID field but has both an RA field and TA field, neither value of which is equal to the BSSID of the BSS in which the STA is associated or any of the other BSSs in the same multiple BSSID set or co-hosted BSSID set to which its BSS belongs. The Individual/Group bit in the TA field is forced to 0 prior to comparison.

A STA shall classify the received PPDU as an intra-BSS PPDU if at least one of the following conditions is true:
- The PPDU carries a frame that has an RA, TA, or BSSID field value that is equal to the BSSID of the BSS or the BSSID of any BSS in which the STA is associated or any of the other BSSs in the same multiple BSSID set or co-hosted BSSID set to which its BSS belongs. The Individual/Group bit in the TA field is forced to 0 prior to the comparison; and/or
- The PPDU carries a Control frame that does not have a TA field and that has an RA field value that matches the saved TXOP holder address of the BSS or any BSS in which the STA is associated or any of the other BSSs in the same multiple BSSID set or co-hosted BSSID set to which its BSS belongs.

Otherwise, the PPDU cannot be determined as an intra-BSS or inter-BSS PPDU.

If, based on the MAC address information of a frame carried in a received PPDU, the received PPDU satisfies both intra-BSS and inter-BSS conditions, then the received PPDU is classified as an intra-BSS PPDU.

Maintaining two NAVs is beneficial in dense deployment scenarios in which a STA requires protection from frames transmitted by STAs within its BSS, i.e., intra-BSS, and wants to avoid interference from frames transmitted by STAs in a neighboring BSS, i.e., inter-BSS. For example, in a TXOP initiated by the AP with which a STA is associated for an TB PPDU transmission, the intra-BSS NAV of the STA is set by the AP to prevent the STA from contending for the channel. The basic NAV of the STA is not updated by transmissions from the AP during the TXOP so that if the basic NAV of the STA is nonzero and the STA receives, from the AP, a Trigger frame with the CS Required subfield equal to 1, the STA will not respond.

The CS mechanism requirements apply to a STA maintaining two NAVs, with the exception of the virtual CS indication of medium. For a STA maintaining two NAVs, if both the NAV timers are 0, the virtual CS indication is that the medium is idle; if at least one of the two NAV timers is nonzero, the virtual CS indication is that the medium is busy.

A STA shall update/set the intra-BSS NAV with the duration information indicated by the received frame in a PSDU if all the following conditions are met:
- The frame is identified as intra-BSS;
- The indicated duration is greater than the current intra-BSS NAV value; and
- The RA of the received frame is not the STA's MAC address; or the STA is not a TXOP holder, and the PPDU carrying the frame does not contain a frame that solicits an immediate response from the STA; or the STA is not a TXOP holder, and the received frame is a Trigger frame.

A STA shall update/set the basic NAV with the duration information indicated by the received frame in a PSDU if all the following conditions are met:
- The frame is identified as inter-BSS or cannot be identified as intra-BSS or inter-BSS;
- The indicated duration is greater than the current basic NAV value; and
- The RA of the received frame is not the STA's MAC address.

Meanwhile, many APs are being installed adjacent to each other to enable STAs to maintain continuous WLAN connections over a wider area. However, overlapping BSSs of multiple APs can lead to issues such as radio interference and transmission collisions between APs. To address these issues, various technologies related to coordination between APs in the frequency, time, and spatial domains (e.g., RU selection, joint transmission, nulling) have been proposed. Various issues that may arise during inter-AP coordination need to be addressed.

When the triggered TXOP sharing protocol is utilized for multi-AP coordination, transmissions within the BSS of each coordinating AP are divided into time units, so that each coordinating AP can perform frame exchange without affecting other coordinating APs.

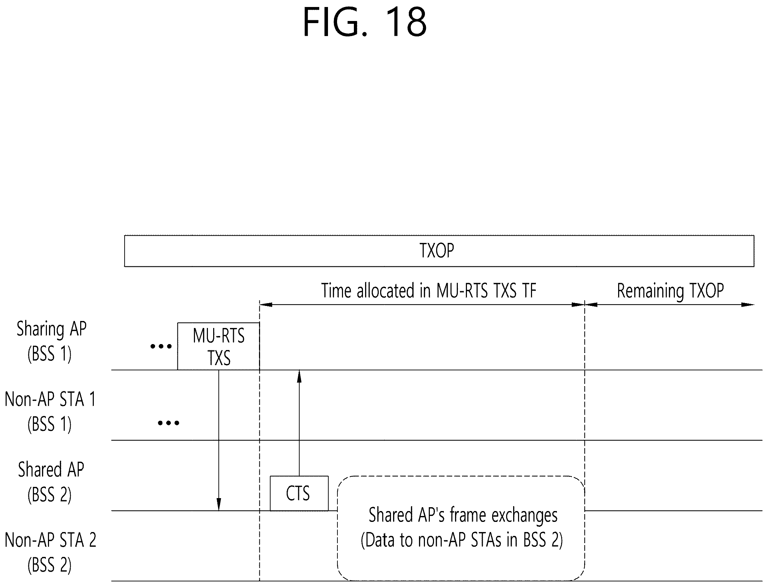

FIG. 18 shows an example of coordinated time division multiple access (C-TDMA) between coordinating APs.

For example, C-TDMA can mean that each coordinating AP exchanges frames without affecting other coordinating APs by dividing transmissions within the BSS of each coordinating AP by time units.

When the triggered TXS protocol is applied to multi-AP coordination operations, the AP in the triggered TXS protocol may be the AP that shares the TXOP in the multi-AP coordination operation, and the STA in the triggered TXS protocol may be the AP that is granted the shared TXOP in the multi-AP coordination operation. In this disclosure, the AP that shares the TXOP may be referred to as a sharing AP (SAP), and the AP that is granted the TXOP by the SAP may be referred to as a shared AP (DAP). The term "SAP" here does not limit the entities sharing the TXOP to only AP STAs - the SAP may also include non-AP STAs that share the TXOP. Furthermore, the term "DAP" does not limit the entity that is granted the shared TXOP to only being an AP STA, and a DAP may also include non-AP STAs that is granted the shared TXOP (or, that transmit and receive with an AP STA that is granted the shared TXOP). Furthermore, frame exchanges performed by a DAP with non-AP STAs belonging to the DAP BSS or SAPs during the allocated time may be referred to as BSS frame exchanges (FEs) of the DAP. For example, RTS/CTS frame exchanges between a DAP and a non-AP STA followed by data frame transmission and block ACK frame responses, UL data frame transmissions by non-AP STAs based on trigger frames transmitted from the DAP, and/or data frame transmissions by the DAP based on trigger frames transmitted from the SAP may be performed.

In the present disclosure, "frame exchange (FE)" may include frame transmission and/or reception operations between STAs. The STAs may be APs or non-AP STAs. Here, the frames may include various types of frames (e.g., data frames, control frames, management frames).

In a typical (triggered) TXS protocol, since an AP shares a TXOP obtained by the AP with a non-AP STA within the same BSS as the AP, the entity granted the shared TXOP (i.e., the non-AP STA) may be protected from the NAV of the entity sharing the TXOP (i.e., the AP). In the present disclosure, being protected by the AP may mean that the NAV is set by the AP. Specifically, STAs within the AP's BSS can receive/detect frames transmitted from the AP and set an intra-BSS NAV, while STAs outside the AP's BSS can receive/detect frames transmitted from the AP and set a basic NAV.

Conversely, in C-TDMA operation, as shown in FIG. 18, the entity sharing a TXOP (i.e., an SAP) and the entity granted the shared TXOP (i.e., a DAP) may be APs with different BSSs. In other words, intra-BSS frame transmission by the SAP may cause STAs within the DAP's BSS to set a basic NAV, preventing appropriate FE with the DAP. Therefore, to ensure appropriate coordination between APs and/or FE within each BSS, sophisticated protection rules related to NAV setting are required. In particular, non-AP STAs associated with a DAP may receive/detect frames transmitted from SAPs or non-AP STAs associated with the SAP, and/or CTS frames transmitted from the DAP, and set a basic NAV (for the SAP). This may result in non-AP STAs failing to transmit UL PPDUs/frames to the DAP.

Therefore, various embodiments of the present disclosure provide methods and apparatuses related to a C-TDMA-based TXOP sharing procedure protected by a SAP in a multi-AP coordination environment.

Furthermore, various embodiments of the present disclosure provide methods and apparatuses related to a C-TDMA-based TXOP sharing procedure unprotected by a SAP in a multi-AP coordination environment.

In the present disclosure, specific designations (names) may be changed, and embodiments of the present disclosure are not limited to such specific designations (names).

### I. C-TDMA-Based TXOP Sharing Procedure protected by SAP

According to embodiments of the present disclosure, non-AP STAs within the BSS of the SAP, the DAP granted the shared TXOP, and/or at least some non-AP STAs within the BSS of the DAP can be protected by the NAV of the SAP through the C-TDMA operating procedure.

According to embodiments of the present disclosure, when APs operate based on C-TDMA in a multi-AP environment, the C-TDMA-based TXOP sharing procedure can be protected within the entire TXOP duration obtained by the entity sharing the TXOP (i.e., the SAP).

The C-TDMA-based TXOP sharing procedure according to the present disclosure can be protected by setting a NAV corresponding to the entire TXOP duration or the time period allocated to the DAP (i.e., the allocation duration) based on information included in a frame transmitted by the SAP. Basically, STAs receiving a frame may set at least one of two NAVs (i.e., a basic NAV or an intra-NAV (or intra-BSS NAV)). The basic NAV may be updated/set based on a PPDU identified as inter-BSS (i.e., inter-BSS), or updated/set based on a PPDU that cannot be identified as inter-BSS or intra-BSS. The intra-NAV can be updated/set based on a PPDU identified as intra-BSS. Specifically, in the C-TDMA operation according to the present disclosure, non-AP STAs within the BSS of the SAP can be protected by setting an intra-NAV based on a frame transmitted by the SAP. In addition, the DAP and/or at least some non-AP STAs within the BSS of the DAP can be protected by setting a basic NAV based on a frame transmitted by the SAP.

### (1) Procedure Example

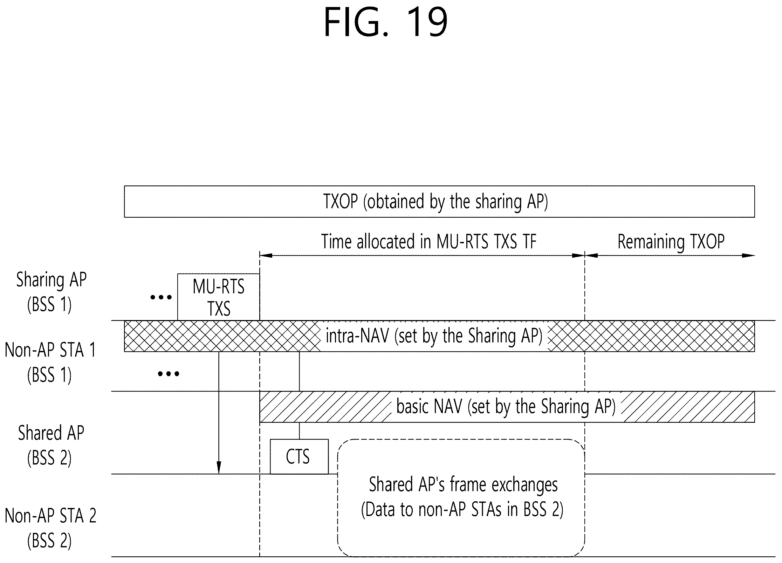

FIG. 19 shows an example of a C-TDMA-based TXOP sharing procedure protected by a SAP according to an embodiment of the present disclosure.

An AP that obtains a TXOP and performs the role of an SAP may set the value of the Duration/ID field in a frame which the AP transmits to a value corresponding to the entire TXOP duration (e.g., a value indicating the end point of the entire TXOP duration). That is, STAs receiving frames transmitted by the SAP may set a NAV (e.g., an intra-NAV or basic NAV) until the end point of the TXOP duration of the SAP. For example, a non-AP STA 1 associated with the SAP belonging to BSS 1 may set an intra-NAV corresponding to the entire TXOP duration based on a frame transmitted by the SAP. For example, a non-AP STA that receives a trigger frame transmitted from an SAP and destined for a specific non-AP STA, or an MU-RTS TF in which the user information field includes the AID of a specific non-AP STA, may ignore the intra-NAV that is set and transmit an UL PPDU/frame.

Although FIG. 19 shows a case where the NAV is set until the end of the TXOP duration, this is exemplary, and the NAV may be set to a different value. For example, STAs that receive frames transmitted by SAP may set the NAV (intra-NAV or basic NAV) until the end of the allocation duration allocated by the SAP (e.g., the allocation duration allocated to the DAP by the MU-RTS TXS TF). To this end, the SAP may set the value of the Duration/ID field of the frame which the SAP transmits to a value (e.g., a value indicating the end of the allocation duration) corresponding to the allocation duration allocated by the SAP (e.g., the allocation duration allocated to the DAP by the MU-RTS TXS TF). In this case, non-AP STA 1 associated with the SAP within BSS 1 may set an intra-NAV corresponding to the allocated duration based on frames transmitted by the SAP. Furthermore, DAP(s) capable of overhearing FEs within BSS 1 of the SAP may set a basic NAV based on frames detected during the FE process, or based on receipt of an MU-RTS TXS TF transmitted from the SAP for TXOP sharing. This SAP-based protection prevents failures and/or frame collisions in the C-TDMA/TXOP sharing procedure that may occur when two DAPs are within the SAP's range but cannot detect each other (e.g., a hidden node problem).

Furthermore, non-AP STAs within BSS 2 associated with the DAP can also detect frames transmitted from the SAP or from non-AP STAs associated with the SAP and set a basic NAV based on the detected frames. However, when a DAP that has been granted the shared TXOP by the SAP attempts to perform FE during the allocated time (i.e., allocated duration), non-AP STAs associated with the DAP may not be able to transmit UL PPDUs/frames because they have set a basic NAV.

To resolve the issue of non-AP STAs associated with the DAP being unable to transmit UL PPDUs/frames due to the basic NAV that is set, the RA field of the MU-RTS TXS TF may be set to the MAC address of the DAP. Non-AP STAs (i.e., non-AP STAs associated with the DAP) that receive an MU-RTS TXS TF with the RA field set to the MAC address of the DAP may interpret the MU-RTS TXS TF as an intra-BSS PPDU and set an intra-BSS NAV. Similarly, the DAP may enable non-AP STAs that only hear the CTS-to-self frame transmitted by the DAP to set the intra-BSS NAV by setting the RA field of the CTS frame, which is a response frame to the MU-RTS TXS TF, to the DAP's MAC address and transmitting the CTS frame with the RA field set to the DAP's MAC address.

Alternatively, the problem of non-AP STAs associated with the DAP not being able to transmit UL PPDUs/frames due to the basic NAV that is set (i.e., protection issues due to the basic NAV) may be resolved by the NAV ignoring method/rule described below.

### (2) NAV ignoring method for UL PPDU/frame transmission by non-AP STAs

Each NAV ignoring method according to the present disclosure can address issues arising from NAVs set by the SAP for non-AP STAs associated with the DAP in C-TDMA operations in a multi-AP coordination environment, and/or issues arising from NAVs set by non-AP STAs associated with the SAP for non-AP STAs associated with the DAP. For example, each NAV ignoring method according to the present disclosure can allow a non-AP STA associated with a DAP to ignore a basic NAV that can be set by a SAP sharing a TXOP, thereby enabling the non-AP STA associated with the DAP to exchange frames with the DAP. Furthermore, the non-AP STA associated with the DAP can ignore a basic NAV that can be set by a non-AP STA associated with the SAP, thereby enabling the non-AP STA to exchange frames with the DAP.

The present disclosure proposes methods for ignoring a basic NAV that can be set by a SAP during a shared period of time (e.g., an allocation duration indicated in the User Info field of a TXS trigger frame) in C-TDMA operation in a multi-AP coordination environment.

### Method 1) Implicit Basic NAV Ignoring Method (Based on Inter-AP Triggered TXS Procedure)

Transmissions within the BSS of each coordinating AP are divided into time units, thereby ensuring that transmissions do not impact each other, and a triggered TXS protocol can be utilized to perform FE. That is, when the triggered TXS protocol is utilized in a multi-AP coordination environment, the procedure presented in FIG. 15 can be similarly applied. Referring to the triggered TXS protocol of FIG. 15, when an AP transmits an MU-RTS TXS TF to a non-AP STA and receives a response thereto (e.g., a CTS frame), TXOP sharing occurs, and the non-AP STA that is granted the shared TXOP can perform FE during the allocated time included in the MU-RTS TXS TF (e.g., the allocation duration of the User Info field for the non-AP STA). When the triggered TXS protocol of FIG. 15 is applied to a multi-AP coordination environment, the SAP transmits an MU-RTS TXS TF (or a control frame) to the DAP, and after the DAP transmits a response (e.g., a CTS frame), FE between the DAP and the non-AP STA can be performed during the allocated time (e.g., the allocation duration included in the User Info field for the DAP).

Accordingly, a rule may be added or defined such that when a non-AP STA associated with the DAP overhears the FE procedure between the SAP and the DAP and identifies the corresponding triggered TXS procedure, the non-AP STA associated with the DAP is allowed to ignore the basic NAV set (by the SAP) for itself.

The rule to (implicitly) ignore the basic NAV can include one or more of the following methods:
**Method 1.1)** When a non-AP STA (associated with the DAP) that overhears the MU-RTS TXS TF transmitted (to the DAP) from an OBSS AP (e.g., SAP) and sets the basic NAV, and detects that the DAP associated with it responds (e.g., with a CTS frame) to the MU-RTS TXS TF after an SIFS, the non-AP STA (associated with the DAP) can assume the frame exchange between these two APs as a frame exchange for C-TDMA operation and ignore the currently set basic NAV.
**Method 1.2)** When a non-AP STA (associated with a DAP) that has overheard a frame (e.g., a trigger frame, a control frame, a data frame, or an UM-RTS TXS TF) transmitted from an OBSS AP (e.g., SAP) and has set a basic NAV, and then detects that the DAP associated with it responds (e.g., a CTS frame) to an MU-RTS TXS TF transmitted from the same OBSS AP after SIFS, the STA may assume the frame exchange between these two APs as a frame exchange for C-TDMA operation and ignore the currently set basic NAV.

In contrast, in a scenario where the basic NAV is set by a frame transmitted from a non-AP STA associated with the SAP, since the non-AP STA associated with the DAP can detect only frames transmitted from the DAP or from non-AP STAs associated with the SAP, it may have difficulty recognizing a C-TDMA procedure. Therefore, a method for non-AP STAs associated with a DAP to ignore the basic NAV by utilizing information obtained from the DAP, SAP, and/or non-AP STAs associated with the SAP (i.e., an explicit basic NAV ignoring method) may be considered.

### Method 2) Explicit basic NAV ignoring method (based on inter-AP negotiation information)

For multi-AP coordination, negotiation information can be exchanged between APs (e.g., SAPs and DAPs). For example, the SAP can transmit a request frame for multi-AP coordination to the DAP, and the DAP can transmit a response frame for multi-AP coordination to the SAP. As another example, a DAP may transmit a request frame for multi-AP coordination to a SAP, and the SAP may transmit a response frame for multi-AP coordination to the DAP.

For example, the request frame may be a coordination request frame and/or a stream classification service (SCS) request frame. The response frame may be a coordination response frame and/or an SCS response frame. The request frame and/or the response frame may include the negotiation information.

Since the AID value in the User Info field of the Trigger Frame is used between the DAP and the non-AP STA, in order for the SAP to share a TXOP with each DAP in multi-AP coordination, an additional/new identifier for the cooperating APs may be required. Therefore, defining a new ID and/or signaling that serves as the AID between the SAP and the DAP, or utilizing BSS color, may be considered. For example, new IDs and signaling can be defined as follows, and the negotiation information can include IDs or signaling based on one or more combinations of A, B, C, or D below:
**A. Multi-AP Group ID:** An ID for a group of APs forming a multi-AP coordination (e.g., 0, 1, 2, ...).
**B. DAP ID:** An ID assigned by the SAP within the configured multi-AP group (e.g., 0, 1, 2, ...).
**C. SAP Capability:** Indicates whether the AP can operate as a SAP.

For example, the QoS characteristic element included in the Stream Classification Service (SCS) request/response frame can be utilized. For example, reserved bits (e.g., 3 bits) in the control information field of the QoS characteristic element can be used. Specifically, a 1-bit signaling can be defined among the reserved bits to indicate SAP capability information. If the bit value of the 1-bit signaling is 0, it may indicate that the AP cannot operate as a SAP. If the bit value of the 1-bit signaling is 1, it may indicate that the AP has the capability to operate as a SAP.

For example, the common information field included in the trigger frame may be utilized. For example, the (EHT) reserved bit (e.g., 7 bits) or reserved bit (e.g., 4 bits) of the common information field may be utilized. Specifically, a new subfield for multi-AP coordination may be defined using the EHT reserved bit, and 1-bit signaling may be defined within the subfield to indicate SAP capability information. Specifically, 1-bit signaling may be defined to indicate SAP capability information using the reserved bit within the common information field.

**D. SAP Operation Signaling:** The AP may indicate that it is currently operating as a SAP and sharing a TXOP with a DAP.

For example, the QoS characteristic element included in the QoS data frame may be utilized. For example, reserved bits (e.g., 3 bits) within the control information field of the QoS characteristic element may be utilized. Specifically, a 1-bit signaling may be defined among the reserved bits to indicate SAP operation signaling information. If the value of the 1-bit signaling is 0, this may indicate that the AP functions as a SAP but does not perform TXOP sharing. If the value of the 1-bit signaling is 1, this may indicate that the AP functions as a SAP and performs TXOP sharing with the DAP.

For example, the common information field included in the trigger frame may be utilized. For example, the (EHT) reserved bit (e.g., 7 bits) or the reserved bit (e.g., 4 bits) of the common information field may be utilized. Specifically, a new subfield for multi-AP coordination may be defined utilizing the EHT reserved bit, and a 1-bit signaling may be defined within this subfield to indicate SAP operation signaling information. Specifically, a 1-bit signaling may be defined to indicate SAP operation signaling information by utilizing a reserved bit within the common information field.

In addition to the information described above, the negotiation information may include i) the MAC address (indicated by the RA field included in the frame's MAC header) and/or ii) BSS color information.

The name of the previously defined ID and/or signaling may be changed, and in addition, capabilities and/or signaling according to the multi-AP cooperation scheme (e.g., C-OFDMA, C-TDMA, joint beamforming) may exist or be included.

Furthermore, information for multi-AP operation (e.g., channel information, DAP buffers) may be present/included.

This negotiation information may be included in coordination request/response frames (e.g., SCS request/response, A-Control field) exchanged during the negotiation procedure between APs participating in multi-AP coordination and transmitted individually from each AP. Here, the coordination request and response frames may be defined as new frames or as new elements of existing request and response frames so that they can be transmitted together with existing request and response frames.

In addition to the inter-AP negotiation procedure, an announcement procedure may be required to enable non-AP STAs associated with each AP to obtain negotiation information (e.g., information about neighboring BSSs and/or information negotiated between APs).

For example, negotiation information (e.g., information about neighboring BSSs and/or information negotiated between APs) may be included in a beacon frame periodically transmitted from the AP.

For example, to convey negotiation information (e.g., information about neighboring BSSs and/or information negotiated between APs) to non-AP STAs associated with each AP, negotiation information including an ID and/or signaling based on one or more combinations of the above-described elements may be included in the common information field and/or the User Info field of the MU-RTS TXS TF transmitted by the SAP.

For example, negotiation information including an ID and/or signaling based on one or more combinations of the above-described elements may be included in a trigger frame (or control frame/data frame) transmitted by the DAP during a time allocated from the SAP (e.g., an allocation duration).

That is, negotiation information (e.g., information about neighboring BSSs and/or information negotiated between APs) can be announced to non-AP STAs associated with each AP via reserved bits or new fields within frames transmitted during the existing (announcement) procedure.

Alternatively, a method for delivering negotiation information (e.g., information about neighboring BSSs and/or information negotiated between APs) to non-AP STAs within individual BSSs through a separate announcement procedure may be considered. For this purpose, a new announcement frame may be defined or a beacon frame may be utilized.

Therefore, a non-AP STA associated with a DAP granted the shared TXOP may ignore its own basic NAV (e.g., the basic NAV set by the SAP or non-AP STAs associated with the SAP) based on an ID and/or signaling based on one or more of the aforementioned combinations. In the following, in C-TDMA operation, the RA value of the MU-RTS TXS TF transmitted from the SAP (i.e., AP-to-AP trigger) may be set to the MAC address of the DAP. Alternatively, the RA value of the MU-RTS TXS TF transmitted from the SAP may be set to broadcast, but the AID value in the User Info field of the MU-RTS TXS TF may be set to the AID value of the corresponding DAP (e.g., a specific AID or DAP ID).

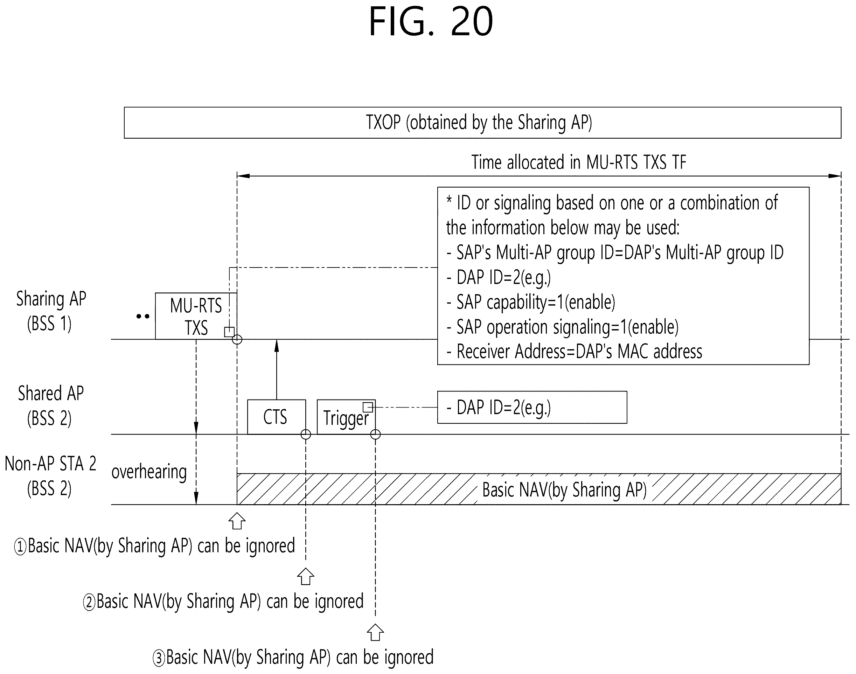

FIG. 20 shows a first example of a procedure for ignoring a basic NAV that may be set by a SAP according to an embodiment of the present disclosure.

Referring to FIG. 20, a non-AP STA associated with a DAP may ignore a basic NAV that may be set by the SAP.

For example, if a non-AP STA associated with a DAP overhears an MU-RTS TXS TF transmitted from a SAP that i) has the same group ID as the multi-AP group ID of the DAP associated with it, and ii) has SAP capability and SAP operation signaling values enabled (i.e., SAP that shares TXOPs with the DAP), the non-AP STA associated with the DAP decodes the MU-RTS TXS TF transmitted from the SAP, and if it identifies that the MAC address indicated by the RA of the MU-RTS TXS TF is the MAC address of the DAP (or if it identifies that the AID value in the User Info field of the MU-RTS TXS TF is set to the AID of the corresponding DAP (e.g., a specific AID or DAP ID)), it may ignore the basic NAV set by the SAP at the time of receiving the MU-RTS TXS TF (① in FIG. 20).

For example, if a non-AP STA associated with a DAP overhears an MU-RTS TXS TF transmitted from a SAP that i) has a group ID that is the same as the multi-AP group ID of the DAP associated with it, ii) has SAP capability and SAP operation signaling values enabled (i.e., SAP that shares TXOP with the DAP), and iii) the non-AP STA detects that the DAP responds to the MU-RTS TXS TF (or transmits a CTS frame), the non-AP STA associated with the DAP decodes the MU-RTS TXS TF transmitted from the SAP to identify that the MAC address indicated by the RA of the MU-RTS TXS TF is the MAC address of the DAP (or identifies that the AID value in the User Info field of the MU-RTS TXS TF is set to the AID of the corresponding DAP (e.g., a specific AID or DAP ID), and at the time of detecting a response frame (or CTS frame) from the DAP (② of FIG. 20), ignores the basic NAV set by the SAP.

For example, a non-AP STA associated with a DAP may overhear an MU-RTS TXS TF transmitted from a SAP that i) has the same group ID as the multi-AP group ID of the DAP associated with it, ii) has SAP capability and SAP operation signaling values enabled (i.e., SAP that shares TXOP with the DAP), and iii) the non-AP STA receives a trigger frame (or control frame/data frame) which the DAP transmitted after responding to the MU-RTS TXS TF (or transmitting a CTS frame), the non-AP STA associated with the DAP decodes the MU-RTS TXS TF transmitted from the SAP to identify that the MAC address indicated by the RA of the MU-RTS TXS TF is the MAC address of the DAP (or identify that the AID value in the User Info field of the MU-RTS TXS TF is set to the AID of the corresponding DAP (e.g., a specific AID or DAP ID)), and after detecting a transmission of a response frame (or, CTS frame) from the DAP, if the DAP ID value in the trigger frame addressed to the non-AP STA matches the DAP ID value obtained from the MU-RTS TXS TF, the non-AP STA may ignore the basic NAV set by the SAP at the time it receives the trigger frame from the DAP (③ in FIG. 20).

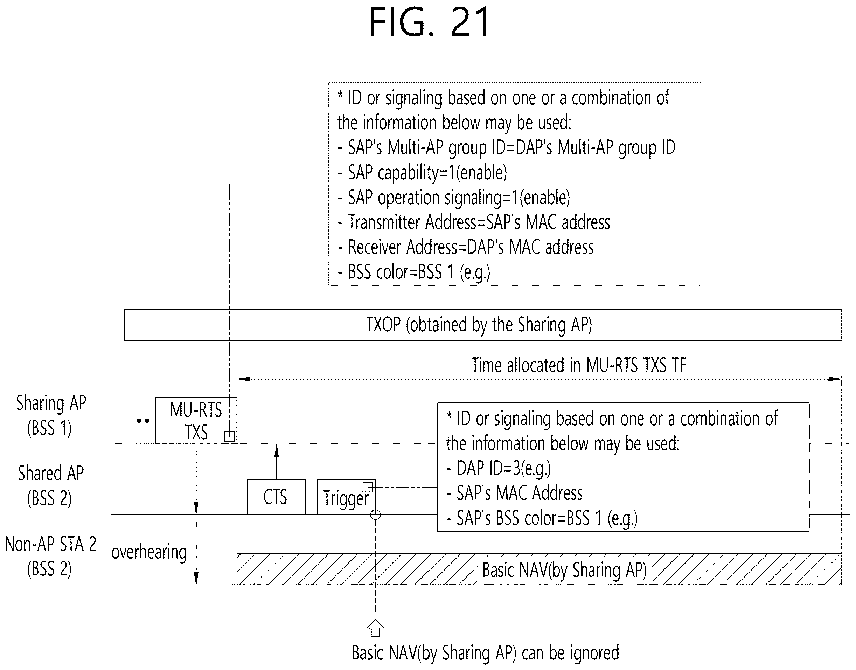

FIG. 21 shows a second example of a procedure for ignoring the basic NAV that can be set by the SAP according to an embodiment of the present disclosure.

Referring to FIG. 21, a non-AP STA associated with a DAP that overhears a frame (e.g., a trigger frame, a control frame, a data frame, and/or an MU-RTS TXS TF) transmitted from a SAP and sets a basic NAV can decode the received frame and store information regarding the multi-AP group ID, the DAP ID, the SAP capability, and/or the SAP operation signaling, as well as the TA, the RA, and/or the BSS color. The DAP can transmit a trigger frame (or a control frame/data frame) including the address of the SAP which shared the TXOP and the BSS color information to the non-AP STAs, and the non-AP STAs which received theses may ignore the basic NAV set by the SAP from the moment it receives the trigger frame from the DAP, if the TA and BSS color information match those of previously overheard frames.

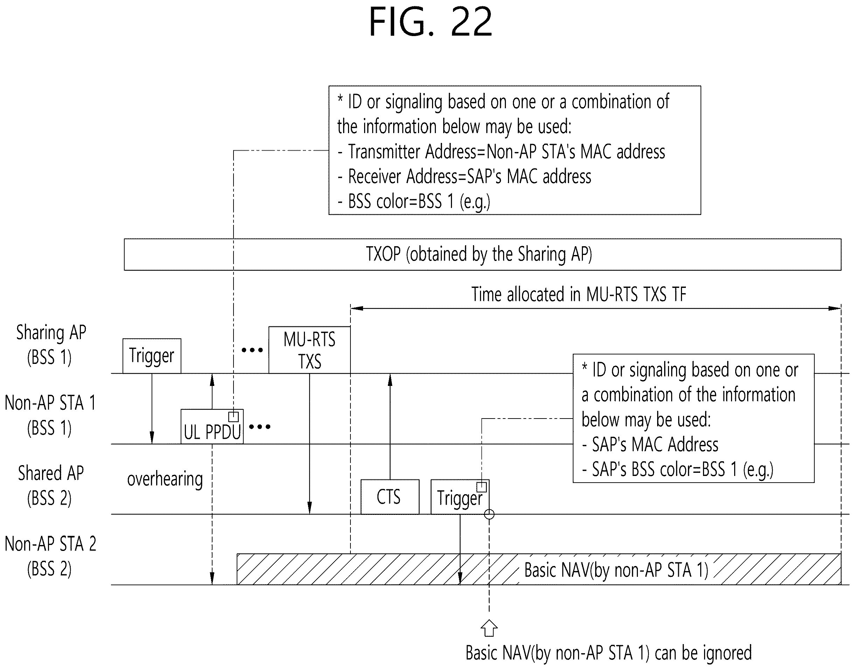

FIG. 22 shows an example of a procedure for ignoring the basic NAV that may be set by a non-AP STA associated with a SAP according to an embodiment of the present disclosure. Hereinafter, in the C-TDMA operation, the RA value of the MU-RTS TXS TF transmitted from the SAP (i.e., AP-to-AP trigger) may be set to the MAC address of the DAP. Alternatively, the RA value of the MU-RTS TXS TF transmitted from the SAP may be set to broadcast, but the AID value in the User Info field of the MU-RTS TXS TF may be set to the AID value of the corresponding DAP (e.g., a specific AID or DAP ID).

Referring to FIG. 22, a non-AP STA associated with a DAP, which has overheard frames transmitted from non-AP STAs associated with the SAP and set the basic NAV, can decode the received frames and store information regarding the TA, RA, and BSS color. The DAP may transmit, to the non-AP STAs, a trigger frame (or control frame/data frame) comprising the address and BSS color information of the SAP sharing the TXOP, and the non-AP STAs which received these may compare the RA and BSS color information with that of the previously overheard frames, and if they match, the non-AP STAs can ignore the basic NAV set by the non-AP STA associated with the SAP from the moment they receives the trigger frame from the DAP.

### (3) Method for Setting the RA Field of an MU-RTS TXS TF

According to an embodiment of the present disclosure, non-AP STAs associated with a DAP receiving an MU-RTS TXS TF may identify the corresponding PPDU (i.e., the PPDU corresponding to the MU-RTS TXS TF) as an intra-BSS PPDU based on the RA field value of the MU-RTS TXS TF and set an intra-BSS NAV. Specifically, the RA field of the MU-RTS TXS TF transmitted by the SAP to the DAP for TXOP sharing may include the MAC address of the corresponding DAP. Non-AP STAs associated with the DAP that receive an MU-RTS TXS TF with the RA field set to the DAP's MAC address may interpret the corresponding MU-RTS TXS TF as an intra-BSS PPDU and set an intra-BSS NAV. Additionally or alternatively, the RA field of the MU-RTS TXS TF transmitted by the SAP to the DAP may include the BSS color information of the corresponding DAP.

To set the RA field of the MU-RTS TXS TF to the address or BSS color information of a specific DAP, the following may be considered:
1) An AP may transmit the MU-RTS TXS TF to a coordinating AP participating in multi-AP coordination or an unassociated STA based on information obtained through a beacon or a separate negotiation/agreement process.
2) When an AP intends to transmit a MU-RTS TXS TF in unicast to a coordination AP participating in multi-AP cooperation or to an unassociated STA, the RA field of the MU-RTS TXS TF may include the MAC address of the coordination AP or the STA.

Similarly, a DAP may set the RA field of a CTS frame to the DAP's MAC address, and by transmitting such CTS frame, non-AP STAs that hear the CTS-to-Self frame transmitted by the DAP may set an intra-BSS NAV. That is, the RA field of the CTS frame transmitted as a response frame to the MU-RTS TXS TF may comprise the MAC address of the DAP, not the SAP, thereby preventing NAV issues. Additionally or alternatively, the RA field of the CTS frame transmitted by the DAP to the SAP may comprise the DAP's BSS color information.

According to an embodiment of the present disclosure, when APs operate in C-TDMA in a multi-AP environment, the C-TDMA procedure can be protected within the entire TXOP duration obtained by an entity (i.e., SAP) sharing a TXOP or within the duration allocated to a DAP (i.e., the allocation duration). Specifically, the C-TDMA procedure/TXS procedure may be protected by setting a NAV for the entire TXOP duration obtained by the SAP or within the duration allocated to the DAP (i.e., the allocation duration) by a frame transmitted by the SAP.

For example, according to the C-TDMA-based TXOP sharing procedure protected by the SAP proposed in the present disclosure, a triggered TXS baseline can be applied, and the hidden node problem between DAPs that may occur in a multi-AP environment can be prevented/avoided.

For example, according to an embodiment of the present disclosure, even if a non-AP STA associated with a DAP sets a basic NAV due to the SAP and/or a non-AP STA associated with the SAP, the non-AP STA associated with the DAP may ignore the basic NAV and transmit an UL PPDU/frame.

### II. C-TDMA-based TXOP Sharing Procedure Not Protected by SAP

According to an embodiment of the present disclosure, in a C-TDMA operating procedure, TXOP sharing and/or FE can be performed while non-AP STAs within the BSS of the SAP, the DAP, and/or at least some non-AP STAs within the BSS of the DAP are not protected by the NAV of the SAP.

According to an embodiment of the present disclosure, when APs operate based on C-TDMA in a multi-AP environment, TXOP sharing can be performed without protection within the entire TXOP duration obtained by an entity (i.e., an SAP) sharing the TXOP.

In a C-TDMA-based TXOP sharing procedure according to an embodiment of the present disclosure, protection by NAV may be excluded within the entire TXOP duration obtained by the SAP, and TXOP sharing and/or FE of the DAP may be performed. For example, the DAP and at least some non-AP STAs within the BSS of the DAP may not set a basic NAV by the frame transmitted by the SAP and may not be protected. On the other hand, protection for FE within the BSS of the SAP may be applied. That is, the non-AP STAs within the BSS of the SAP may or may not set an intra-NAV by the frame transmitted by the SAP.

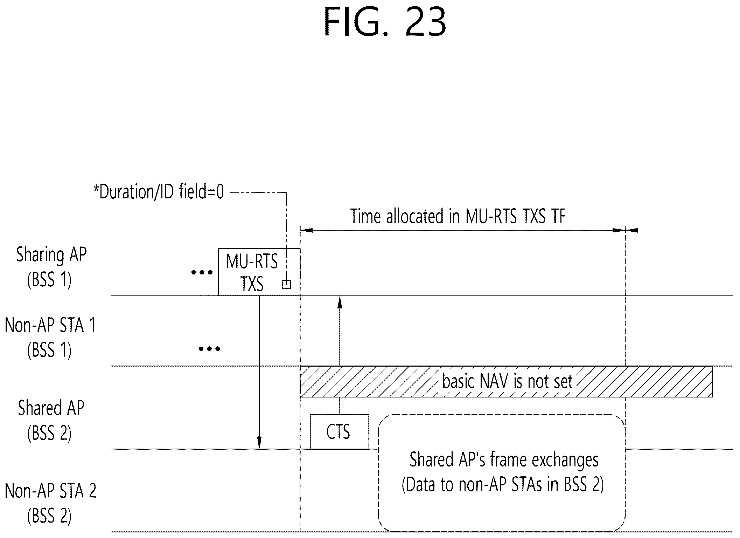

FIG. 23 shows an example of a C-TDMA-based TXOP sharing procedure not protected by a SAP, according to an embodiment of the present disclosure.

Referring to FIG. 23, an AP that obtains a TXOP and serves as an SAP may set the value of the duration/ID field of a frame which the AP transmits not to a value corresponding to the entire TXOP duration (e.g., indicating the end point of the entire TXOP duration), but to i) a value corresponding to a duration for FE with non-AP STAs within its BSS (e.g., an allocation duration), or ii) 0. For example, STAs that receive a frame in which the Duration/ID field value is set to a value corresponding to a duration required for FE within the BSS of the SAP (e.g., an allocation duration) may set a NAV (e.g., an intra-NAV, a basic NAV) during that duration (or until the end point of that duration). For example, STAs that receive a frame in which the Duration/ID field value is set to 0 may not set a NAV.

For example, the SAP can apply protection by transmitting a frame with the Duration/ID field set to a value corresponding to the time/duration required for FE with non-AP STA 1 belonging to BSS 1. In another example, the SAP may transmit a frame with the value of the duration/ID field set to 0, thereby performing FE with SIFS without protection.

Furthermore, a SAP may transmit an MU-RTS TXS TF with the Duration/ID field set to 0 to share a TXOP with a DAP. Through this, DAP and non-AP STAs associated with the DAP may not set a basic NAV due to the SAP or non-AP STAs associated with the SAP during a time allocated by the SAP (e.g., allocation duration), so that they can perform FE with SIFS interval without protection from the SAP. That is, when the SAP transmits an MU-RTS TXS TF with the Duration/ID field set to 0 instead of a value corresponding to the entire TXOP duration, the DAP that has been granted the shared TXOP through the MU-RTS TXS TF can perform FE during the allocated time, and non-AP STAs associated with the DAP may transmit UL PPDUs/frames to the DAP without setting a basic NAV.

According to an embodiment of the present disclosure, when APs operate based on C-TDMA in a multi-AP environment, TXOP sharing can be performed without the corresponding C-TDMA procedure being protected within the entire TXOP duration obtained by the entity sharing the TXOP (i.e., SAP). To this end, the SAP may transmit an MU-RTS TXS TF with the Duration/ID field set to 0. According to the C-TDMA-based TXOP sharing method described above, non-AP STAs associated with a DAP can transmit UL PPDUs/frames (without setting a basic NAV).

The following describes the methods performed by a STA associated with a DAP and an AP in a C-TDMA-based TXOP sharing procedure not protected by a SAP.

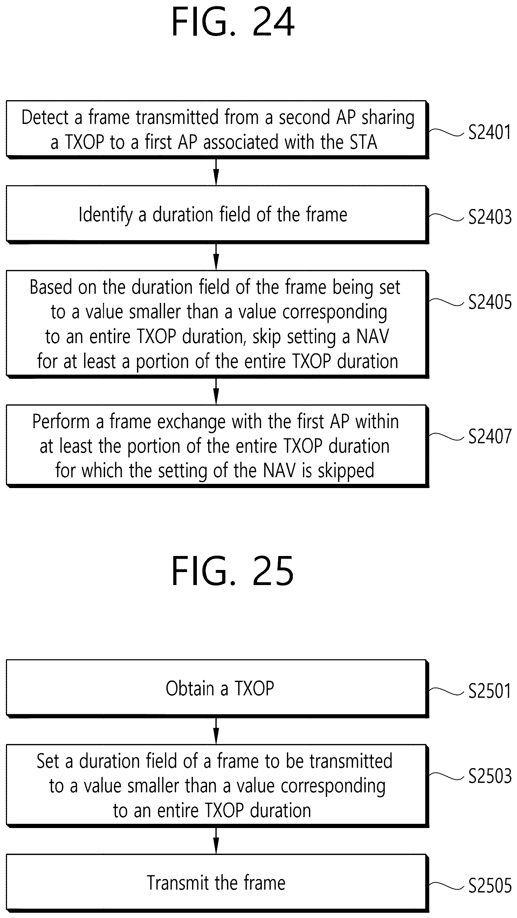

FIG. 24 shows an example of a method performed by a STA according to an embodiment of the present disclosure. The STA in FIG. 24 may be a STA associated with DAP.

Referring to FIG. 24, in step S2401, the STA may detect a frame transmitted from a second AP (e.g., SAP) sharing a TXOP to a first AP (e.g., DAP) associated with the STA.

In step S2403, the STA may identify a duration field of the frame.

In step S2405, based on the duration field of the frame being set to a value smaller than a value corresponding to an entire TXOP duration, the STA may skip setting a network allocation vector (NAV) for at least a portion of the entire TXOP duration.

In step S2407, the STA may perform a frame exchange with the first AP within at least the portion of the entire TXOP duration for which the setting of the NAV is skipped.

According to various embodiments, the duration field of the frame may be set to a value corresponding to an allocation duration for an STA associated with the second AP within the entire TXOP duration.

According to various embodiments, during the allocation duration for the STA associated with the second AP, frame exchange may be performed between the second AP and the STA associated with the second AP.

According to various embodiments, the STA may set a NAV during the allocation duration for the STA associated with the second AP within the entire TXOP period. At least the portion of the entire TXOP duration for which the setting of the NAV is skipped may comprise a duration within the entire TXOP duration excluding the allocation duration for the STA associated with the second AP.

According to various embodiments, the duration field of the frame may be set to 0.

According to various embodiments, based on the duration field of the frame being set to 0, frame exchange may be performed on a basis of short interframe spaces (SIFS) intervals.

According to various embodiments, at least the portion of the entire TXOP duration for which the setting of the NAV is skipped may comprise the entire TXOP duration.

According to various embodiments, the frame with the duration field set to 0 may be a TXS trigger frame transmitted from the second AP to the first AP.

According to various embodiments, the TXS trigger frame comprises information indicating an allocation duration for the first AP. The STA may perform frame exchange with the first AP during the allocation duration based on skipping the setting of the NAV.

FIG. 25 show an example of a method performed by an AP according to an embodiment of the present disclosure. The AP in FIG. 25 may be an SAP.

Referring to FIG. 25, in step S2501, the AP may obtain a TXOP.

In step S2503, the AP may set a duration field of a frame to be transmitted to a value smaller than a value corresponding to an entire TXOP duration.

In step S2505, the AP may transmit the frame.

According to various embodiments, the duration field of the frame may be set to a value corresponding to an allocation duration for an STA associated with the AP within the entire TXOP duration.

According to various embodiments, frame exchange may be performed between the AP and the STA associated with the AP during the allocation duration for the STA associated with the AP.

According to various embodiments, the duration field of the frame may be set to 0.

According to various embodiments, frame exchange may be performed on a basis of a SIFS interval based on the duration field of the frame being set to 0.

According to various embodiments, the frame with the duration field set to 0 may be a TXS trigger frame transmitted to another AP.

According to various embodiments, the TXS trigger frame may comprise information indicating an allocation duration. Based on the duration field of the frame being set to 0, frame exchange may be performed during the allocation duration without setting a NAV.

The technical features of the present disclosure described above can be applied to various devices and methods. For example, the technical features of the present disclosure described above can be performed/supported by the devices of FIG. 1 and/or FIG. 5. For example, the technical features of the present disclosure described above can be applied only to a part of FIG. 1 and/or FIG. 5. For example, the technical features of the present disclosure described above can be implemented based on the processing chips 114, 124 of FIG. 1, or implemented based on the processors 111, 121 and the memories 112, 122 of FIG. 1, or implemented based on the processor 510 and the memory 520 of FIG. 5.

For example, the processor 111, the processing chip 114 of FIG. 1 and/or the processor 510 of FIG. 5 may be configured to execute instructions stored in the memory 112, 520 to implement the method performed by the STA in the present disclosure. The method comprises: detecting a frame transmitted from a second access point (AP) sharing a transmission opportunity (TXOP) to a first AP associated with the STA; identifying a duration field of the frame; based on the duration field of the frame being set to a value smaller than a value corresponding to an entire TXOP duration, skipping setting a network allocation vector (NAV) for at least a portion of the entire TXOP duration; and performing a frame exchange with the first AP within at least the portion of the entire TXOP duration for which the setting of the NAV is skipped.

For example, the processor 121 and/or processing chip 124 of FIG. 1 may be configured to execute instructions stored in the memory 122 to implement the method performed by the AP in the present disclosure. The method comprises: obtaining a transmission opportunity (TXOP); setting a duration field of a frame to be transmitted to a value smaller than a value corresponding to an entire TXOP duration; and transmitting the frame.

The technical features of the present disclosure can be implemented based on a computer readable medium (CRM) (e.g., non-transitory CRM). For example, the CRM in the present disclosure may comprise at least one CRM having stored thereon a program code implementing instructions executed by at least one processor.

For example, the CRM may be the memory 112 of FIG. 1, the memory 520 of FIG. 5, and/or a separate external memory/storage medium/disk. The CRM may store instructions that implement the method performed by the STAin the present disclosure based on being executed by a processor (e.g., the processor 111, the processing chip 114 of FIG. 1, and/or the processor 510 of FIG. 5). The method comprises: detecting a frame transmitted from a second access point (AP) sharing a transmission opportunity (TXOP) to a first AP associated with the STA; identifying a duration field of the frame; based on the duration field of the frame being set to a value smaller than a value corresponding to an entire TXOP duration, skipping setting a network allocation vector (NAV) for at least a portion of the entire TXOP duration; and performing a frame exchange with the first AP within at least the portion of the entire TXOP duration for which the setting of the NAV is skipped.

For example, the CRM may be the memory 122 of FIG. 1 and/or a separate external memory/storage medium/disk. The CRM may store instructions that implement the method performed by the AP in the present disclosure based on being executed by a processor (e.g., the processor 121 and/or the processing chip 124 of FIG. 1). The method comprises: obtaining a transmission opportunity (TXOP); setting a duration field of a frame to be transmitted to a value smaller than a value corresponding to an entire TXOP duration; and transmitting the frame.

The foregoing technical features of this disclosure are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The present disclosure may have various advantageous effects.

For example, according to a C-TDMA-based TXOP sharing method protected by the SAP, non-AP STAs associated with the DAP may transmit UL PPDUs/frames by ignoring the basic NAV that has been set.

For example, according to a C-TDMA-based TXOP sharing method that is not protected by the SAP, non-AP STAs associated with the DAP may transmit UL PPDUs/frames without setting a basic NAV.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus, and technical features in method claim(s) and apparatus claim(s) can be combined to be implemented or performed in a method.

## Claims

1. A method performed by a station (STA) in a wireless local area network (LAN) system, comprising:
detecting a frame transmitted from a second access point (AP) sharing a transmission opportunity (TXOP) to a first AP associated with the STA;
identifying a duration field of the frame;
based on the duration field of the frame being set to a value smaller than a value corresponding to an entire TXOP duration, skipping setting a network allocation vector (NAV) for at least a portion of the entire TXOP duration; and
performing a frame exchange with the first AP within at least the portion of the entire TXOP duration for which the setting of the NAV is skipped.

2. The method of claim 1, wherein the duration field of the frame is set to a value corresponding to an allocation duration for an STA associated with the second AP within the entire TXOP duration.

3. The method of claim 2, wherein, during the allocation duration for the STA associated with the second AP, frame exchange is performed between the second AP and the STA associated with the second AP.

4. The method of claim 2, further comprising setting a NAV during the allocation duration for the STA associated with the second AP within the entire TXOP period,
wherein at least the portion of the entire TXOP duration for which the setting of the NAV is skipped comprises a duration within the entire TXOP duration excluding the allocation duration for the STA associated with the second AP.

5. The method of claim 1, wherein the duration field of the frame is set to 0.

6. The method of claim 5, wherein, based on the duration field of the frame being set to 0, frame exchange is performed on a basis of short interframe spaces (SIFS) intervals.

7. The method of claim 5, wherein at least the portion of the entire TXOP duration for which the setting of the NAV is skipped comprises the entire TXOP duration.

8. The method of claim 5, wherein the frame with the duration field set to 0 is a TXOP sharing (TXS) trigger frame transmitted from the second AP to the first AP.

9. The method of claim 8, wherein the TXS trigger frame comprises information indicating an allocation duration for the first AP, and
wherein the method further comprises performing frame exchange with the first AP during the allocation duration based on skipping the setting of the NAV.

10. A station (STA) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
detecting a frame transmitted from a second access point (AP) sharing a transmission opportunity (TXOP) to a first AP associated with the STA;
identifying a duration field of the frame;
based on the duration field of the frame being set to a value smaller than a value corresponding to an entire TXOP duration, skipping setting a network allocation vector (NAV) for at least a portion of the entire TXOP duration; and
performing a frame exchange with the first AP within at least the portion of the entire TXOP duration for which the setting of the NAV is skipped.

11. An apparatus configured to operate in a wireless local area network (LAN) system, comprising:
at least one processor; and
at least one memory operatively coupled to the at least one processor,
wherein the at least one memory stores instructions that, based on being executed by the at least one processor, perform operations comprising:
detecting a frame transmitted from a second access point (AP) sharing a transmission opportunity (TXOP) to a first AP associated with the STA;
identifying a duration field of the frame;
based on the duration field of the frame being set to a value smaller than a value corresponding to an entire TXOP duration, skipping setting a network allocation vector (NAV) for at least a portion of the entire TXOP duration; and
performing a frame exchange with the first AP within at least the portion of the entire TXOP duration for which the setting of the NAV is skipped.

12. A non-transitory computer readable medium (CRM) having stored thereon a program code implementing instructions that, based on being executed by at least one processor, perform operations comprising:
detecting a frame transmitted from a second access point (AP) sharing a transmission opportunity (TXOP) to a first AP associated with the STA;
identifying a duration field of the frame;
based on the duration field of the frame being set to a value smaller than a value corresponding to an entire TXOP duration, skipping setting a network allocation vector (NAV) for at least a portion of the entire TXOP duration; and
performing a frame exchange with the first AP within at least the portion of the entire TXOP duration for which the setting of the NAV is skipped.

13. A method performed by an access point (AP) in a wireless local area network (LAN) system, comprising:
obtaining a transmission opportunity (TXOP);
setting a duration field of a frame to be transmitted to a value smaller than a value corresponding to an entire TXOP duration; and
transmitting the frame.

14. An access point (AP) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
obtaining a transmission opportunity (TXOP);
setting a duration field of a frame to be transmitted to a value smaller than a value corresponding to an entire TXOP duration; and
transmitting the frame.

15. The method of claim 14, wherein the duration field of the frame is set to a value corresponding to an allocation duration for an STA associated with the AP within the entire TXOP duration.

16. The method of claim 15, wherein frame exchange is performed between the AP and the STA associated with the AP during the allocation duration for the STA associated with the AP.

17. The method of claim 14, wherein the duration field of the frame is set to 0.

18. The method of claim 17, wherein frame exchange is performed on a basis of a short interframe space (SIFS) interval based on the duration field of the frame being set to 0.

19. The method of claim 17, wherein the frame with the duration field set to 0 is a TXOP sharing (TXS) trigger frame transmitted to another AP.

20. The method of claim 19, wherein the TXS trigger frame comprises information indicating an allocation duration, and
based on the duration field of the frame being set to 0, frame exchange is performed during the allocation duration without setting a network allocation vector (NAV).
